# EUROPÄISCHE PATENTANMELDUNG

(11) **EP 1 209 465 A2**
(43) Veröffentlichungstag der Anmeldung: **29.05.2002**
(21) Anmeldenummer: 01250360.3
(22) Anmeldetag: 15.10.2001
(51) Int. Cl.: G01N 33/18

(54) **Verfahren zum Testen von bepflanzten und unbepflanzten Bodensystemen auf ihre Eignung für die Abwasserreinigung und Testeinheit**

(30) Priorität: 18.10.2000 DE 10051727
(71) Anmelder: UFZ-UMWELTFORSCHUNGSZENTRUM Leipzig-Halle GmbH, 04318 Leipzig (DE)
(72) Erfinder: Kappelmeyer, Uwe, 04129 Leipzig (DE); Kuschk, Peter, Dr., 06116 Halle (DE)
(74) Vertreter: Hengelhaupt, Jürgen D., Dipl.-Ing.

(57) **Zusammenfassung**

Die Erfindung betrifft ein Verfahren zum Testen von bepflanzten und unbepflanzten Bodensystemen auf ihre Eignung für die Abwasserreinigung und eine Testeinheit.

Die Aufgabe der Erfindung, ein gattungsgemässes Verfahren und eine Testeinheit zu entwickeln, mit denen die beschriebenen Nachteile des Standes der Technik vermieden werden und mit denen eine realitätsnahe und vollständige Bilanz, einschließlich der Gasphasen, erstellt werden kann, wird durch ein Verfahren gelöst, welches dadurch gekennzeichnet ist, dass in einer Testeinheit eine definierte, konzentrisch verlaufende Strömung aus einem zu behandelnden Wasser erzeugt wird, indem das zu untersuchende Wasser aus einem inneren Kreislauf abgesaugt und einem äußeren Kreislauf zugeführt wird.

Die Testeinheit nach der Erfindung ist dadurch gekennzeichnet, dass ein Reaktor (1) aus einem Außenring (2) und einem dazu konzentrisch angeordneten Innenring (3) besteht, zwischen denen sich ein Festbettmaterial wie Boden, Sand, Kies befindet, und der mit einem gasdichten oberen Abschluß (4) mit Pflanzöffnungen (5) und einem Boden (11) versehen ist, wobei Öffnungen (12, 13) für Zulauf- und Ablaufleitungen (6, 7) vorgesehen sind.

## Beschreibung

Die Erfindung betrifft ein Verfahren zum Testen von Bodensystemen wie durchströmte Pflanzenkläranlagen auf ihre Eignung für die Abwasserreinigung bzw. zur Bestimmung von Prozeßparametern und deren Optimierung und eine Testeinheit gemäß den Ansprüchen 1 und 3.

Bekannt ist es, die Eignung von bewachsenen Bodenfiltersystemen für die Abwasserreinigung mit realen Systemen zu testen.

Hierzu ist es entweder notwendig, im jeweiligen Testgebiet die technische Anlage zu errichten oder aber das Abwasser zu einer bestehenden Anlage zu befördern. Mit diesen Systemen können dann die Versuche zur Eignung der Anlagen für die Abwasserreinigung bzw. zur Bestimmung von Prozeßparametern und deren Optimierung durchgeführt werden (Wießner et al. (1999), "Treating a lignite pyrolysis wastewater in a constructed subsurface flow wetland", Water Research, Vol. 33, Iss. 5, pp. 1296-1302).

Weiterhin ist es bekannt, in kleineren Testsystemen (Mikrokosmen) zu arbeiten, in denen die Versuche zum Abbauverhalten durchgeführt werden können (Polprasert et al. (1998), "Design model for COD removal in constructed wetlands based on biofilm activity", Journal of Environmental Engineering-ASCE, Vol. 124, Iss. 9, pp. 838-843; Machate et al. (1997), "Degradation of phenanthrene and hydraulic characteristics in a constructed wetland", Water Research, Vol. 31, Iss. 3, pp. 554-560). Hierbei reicht die Variationsbreite von Hydroponiksystemen (Bodelier et al.(1997), "Effects of photoperiod on growth of and denitrification by Pseudomonas chlororaphis in the root zone of Glyceria maxima, studied in a gnotobiotic microcosm", Plant and Soil, Vol. 190, Iss. 1, pp. 91-103) bis zu Festbettsystemen mit unterschiedlichen geometrischen Formen, wie zum Beispiel rechteckige oder zylindrische Systeme, in denen dann versucht wird, eine realitätsnahe Strömung und Verweilzeit einzustellen.

Beide Testansätze werden bezogen auf die Gasphase als "offene Systeme" betrieben.

Diese bekannten Testsysteme haben den Nachteil schwer beschreibbarer Strömungsverläufe.

In Laborsystemen nehmen diese Probleme, zum Beispiel durch Randgängigkeitsphänomene, extrem zu. Aus diesem Grunde sind die laborbasierten Ergebnisse nur schwer technologisch auf reale Anlagen transformierbar. Bei großen, realen Systemen besteht das Problem der Wahl geeigneter, repräsentativer Probenahmepunkte sowie ein hoher Aufwand für die Errichtung von Testanlagen vor Ort bzw. dem Transport größerer Testwassermengen zu bestehenden technischen Anlagen.

Mit beiden Testansätzen ist es sehr schwer, eine vollständige Bilanz, einschließlich der Gasphasen, zu erstellen.

Aufgabe der Erfindung ist es, ein gattungsgemässes Verfahren und eine Testeinheit zu entwickeln, mit denen die beschriebenen Nachteile des Standes der Technik vermieden werden und mit denen eine realitätsnahe und vollständige Bilanz, einschließlich der Gasphasen, erstellt werden kann.

Die Aufgabe der Erfindung wird durch ein Verfahren gemäß den Merkmalen des Anspruches 1 und durch eine Testeinheit gemäß den Merkmalen des Anspruches 3 gelöst.

Zweckmäßige Ausgestaltungen der Erfindung sind in den Unteransprüchen beschrieben.

Nachfolgend wird die Erfindung anhand eines konkreten Ausführungsbeispiels einer Testeinheit näher erläutert. In der zugehörigen Zeichnung zeigen:
- Fig. 1 :: die schematische Darstellung einer Testeinheit (Seitenansicht) und
- Fig. 2 :: die Draufsicht in Schnittdarstellung der Testeinheit nach Fig. 1.

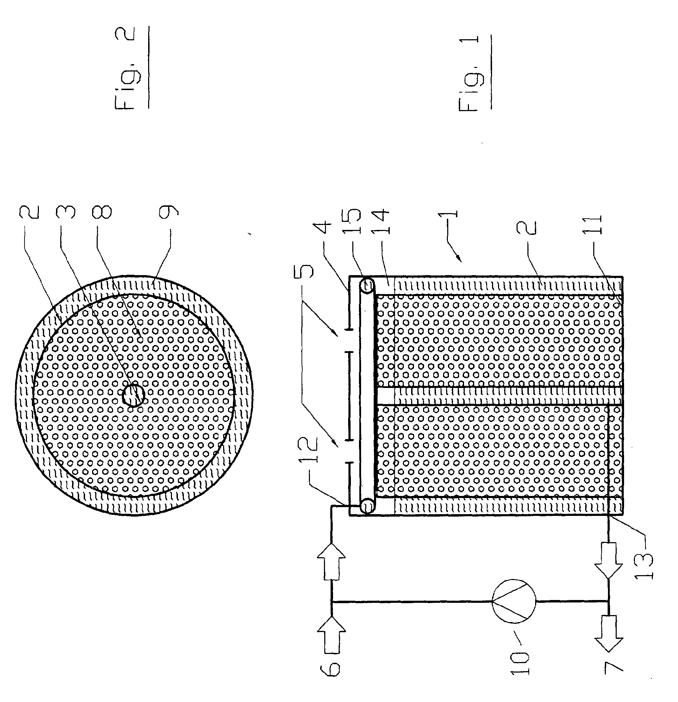

Die Fig. 1 zeigt in einer schematischen Darstellung die Seitenansicht eines zylindrisch ausgeführten Reaktors 1 als Testeinheit.

Danach wird der Reaktor 1 aus einem Außenring 2 und einem dazu konzentrisch angeordneten Innenring 3 gebildet, die mit einem Boden 11 gasdicht abgeschlossen sind. Der obere Teil des Reaktors 1 kann durch einen Deckel 4 mit Pflanzöffnungen 5 gasdicht verschlossen werden. Zum Reaktor 1 gehören weiterhin Zuleitungen zum Innenring 3 und Außenring 2, die als Zufluß 6 in den Außenring 2 und als Abfluß 7 aus dem Innenring 3 dienen. Im Deckel 4 befindet sich ein Eindüsring 15, über den das Untersuchungswasser über den Außenring 2 in den gesamten Reaktorraum gelangt. Der Eindüsring 15 ist ein mit Bohrungen versehenes Ringrohr. Die Wände des Innen- und des Außenrings 3, 2 sind als Edelstahlbleche mit Bohrungen ausgeführt, wobei die Bohrungsgröße der Kornung des Untersuchungsmaterials angepasst ist, zusätzlich sind die Wände unten mit einer Gage verbunden (nicht dargestellt), um das Austreten des Festbettes zu verhindern.

Der Zwischenraum 8 zwischen dem Innenring 3 und dem Außenring 2 ist mit einem Festbettmaterial wie Kies, Sand, Boden gefüllt.

Im Ausführungsbeispiel wird der Zwischenraum 8 des Reaktors 1 mit gewaschenem Kies gefüllt und mit geeigneten Pflanzen, zum Beispiel Sumpfpflanzen, bepflanzt. Nach dem Befüllen des gesamten Reaktors 1 bis zu einer definierten Füllhöhe - in der Regel über dem Festbett - mit dem Untersuchungswasser 9 wird der Kreislauf durch Absaugen des Untersuchungswassers 9 aus dem inneren Ring 3 und dessen Eindüsen in den Außenring 2 mittels nichtdargestellter Pumpen betrieben (innerer Kreislauf). Dann erfolgt, im Falle der Bestimmung von vollständigen Bilanzen, die gasdichte Abdichtung des Deckels 4 und der Pflanzlöcher 5. Der Reaktor 1 wird nun entweder beimpft, oder es wird die autochthone Mikroflora für die Untersuchungen benutzt.

Die Füllstandshöhe wird über eine nicht dargestellte Bodendrucksonde und Ventilschaltung oder über einen Siphon geregelt.

Nach der Inbetriebnahme des inneren Kreislaufs erfolgt das Zumischen frischen Untersuchungswassers 9 in diesen Kreislauf und über eine Füllstandsregelung 10 das Auskreisen des Überschusswassers. Durch den Zulaufstrom wird eine mittlere Verweilzeit von zum Beispiel fünf Tagen eingestellt. Von diesem Zulaufstrom unabhängig und damit von der Verweilzeit unabhängig, wird mittels des Kreislaufstromes die Durchmischung des Reaktors 1 eingestellt. Der Kreislaufstrom wird sehr viel höher, zum Beispiel zehnmal so hoch wie der Zulaufstrom eingestellt. In diesem Kreislaufstrom erfolgt während des Versuchs die kontinuierliche Bestimmung von gängigen Abwasserparametern wie pH-Wert, Redoxwert und Sauerstoffgehalt mit Elektroden. Aus dem inneren Kreislaufstrom werden auch die Flüssigkeitsproben für die Analytik des Reaktorinhalts genommen.

Über das Verhältnis von Kreislaufstrom zu Zulaufstrom sind die unterschiedlichsten Strömungsverhältnisse vom ideal durchmischten Rührkessel bis hin zum Strömungsrohr einstellbar.

Das ungünstige Strömungsregime der bekannten Testanlagen ist durch die konzentrisch verlaufende Strömung in dem Reaktor 1 nach der Erfindung umgangen. Die Strömung ergibt sich durch das Absaugen der Flüssigkeit 9 aus dem Innenring 3 und das Zuführen der abgesaugten Flüssigkeit 9 in den Außenring 2. Durch diese idealen und eindeutig beschreibbaren Strömungsverhältnisse sind die laborbasierten Ergebnisse auf reale Anlagen übertragbar. Es sind Untersuchungen zum Abbau von Problemstoffen, Grundlasten und zur Nährstoffelimination sowie Verteilungsuntersuchungen, einschließlich kompletter Bilanzen unter Einbeziehung der Gasphasen durchführbar.

Der über dem Kiesring befindliche Gasraum 14 kann mit verschiedenen Gasen gespült und zur Bilanzierung beprobt werden. Durch eine Gashaube, die über die Phyllussphäre der Pflanzen gesetzt und die sich darunter ergebenen Gasphase beprobt wird, wird eine komplette Bilanzierung der emittierten Stoffe und deren Umsetzung möglich.

### Bezugszeichenaufstellung

- 1: Reaktor
- 2: Außenring
- 3: Innenring
- 4: Deckel
- 5: Pflanzöffnungen
- 6: Zulauf
- 7: Ablauf
- 8: Zwischenraum (Festbett)
- 9: Untersuchungswasser
- 10: Füllstandsregelung
- 11: Boden
- 12: Öffnung
- 13: Öffnung
- 14: Gasraum
- 15: Eindüsring

## Patentansprüche

1. Verfahren zum Testen von bepflanzten bzw. unbepflanzten Bodensystemen auf ihre Eignung für die Abwasserreinigung,
**dadurch gekennzeichnet, daß** in einer Testeinheit eine definierte, konzentrisch verlaufende Strömung aus einem zu behandelnden Wasser erzeugt wird, indem das zu untersuchende Wasser aus einem inneren Kreislauf abgesaugt und einem äußeren Kreislauf zugeführt wird.

2. Verfahren nach Anspruch 1, **dadurch gekennzeichnet, daß** die Inbetriebnahme des inneren Kreislaufs mit einer Pumpe vorgenommen wird und daß danach eine Zulaufpumpe so aktiviert wird, daß neues Untersuchungswasser mit dem inneren Kreislauf vermischt wird und über eine Füllstandsregelung die Einstellung eines definierten Füllstands des Untersuchungswassers erfolgt und das Auskreisen des Überschußwassers gewährleistet wird und die Verweilzeit in Abhängigkeit vom zudosierten Untersuchungswasser eingestellt wird, wobei unabhängig von dem Zulaufstrom mittels des wesentlich höher eingestellten Kreislaufstromes eine Durchmischung eingestellt wird, und wobei im Kreislaufstrom die kontinuierliche Bestimmung der relevanten Parameter wie pH-Wert, Redoxwert, Gelöstsauerstoff vorgenommen wird.

3. Testeinheit zum Testen von Bodensystemen auf ihre Eignung für die Abwasserreinigung,
**dadurch gekennzeichnet, daß** ein Reaktor (1) aus einem Außenring (2) und einem dazu konzentrisch angeordneten Innenring (3) besteht, zwischen denen sich ein Festbettmaterial wie Boden, Sand, Kies befindet, und der mit einem gasdichten oberen Abschluß (4) mit Pflanzöffnungen (5) und einem Boden (11) versehen ist, wobei Öffnungen (12, 13) für Zulauf- und Ablaufleitungen (6, 7) vorgesehen sind.

4. Testeinheit nach Anspruch 3, **dadurch gekennzeichnet, daß** der Reaktor (1) eine zylindrische Bauform aufweist und mit einer Füllstandsregelung (10) verbunden ist.
